# EUROPÄISCHE PATENTSCHRIFT

(11) **EP 0 995 867 B1**
(45) Veröffentlichungstag und Bekanntmachung des Hinweises auf die Patenterteilung: **20.03.2002**
(21) Anmeldenummer: 99119727.8
(22) Anmeldetag: 05.10.1999
(51) Int. Cl.: E05B 65/02, E05D 7/02, E05D 3/02, H05K 5/02

(54) **Schaltschrank mit Stangenverschluss**
Switch cabinet with locking bar arrangement
Armoire de distribution électrique avec dispositif de fermeture à barre

(30) Priorität: 06.10.1998 DE 29817840 U
(43) Veröffentlichungstag der Anmeldung: 26.04.2000
(73) Patentinhaber: EMKA BESCHLAGTEILE GmbH & Co. KG, D-42551 Velbert (DE)
(72) Erfinder: Hoffmann, Rainer, 40764 Langenfeld (DE); Sauerland, Manfred, 45144 Essen (DE)
(74) Vertreter: Müller, Karl-Ernst, Dr., Dipl.-Ing.

(56) Entgegenhaltungen:
- CH-A- 598 703
- US-A- 3 863 391
- US-A- 4 612 728
- US-A- 5 367 828

## Beschreibung

Die Erfindung betrifft einen Schrank, insbesondere aus dünnwandigem Material bestehender Schaltschrank, mit einer an einer Scharnierseite mittels Scharnieren an dem Schrankkorpus festgelegten, jeweils eine zum Schrankkorpus gerichtete Abkantung aufweisenden Tür, wobei das Scharnier aus einem am Schrankkorpus befestigten ersten Lagerbock und einem an der Tür mittels einer Klemmstifteinrichtung im Bereich der Abkantung festgelegten zweiten Lagerbock besteht und der erste Lagerbock einen von ihm zur Tür abragenden Arm mit einer Lagerbohrung zur Aufnahme eines durch die zugeordnete Lagerbohrung des zweiten Scharnierbockes greifenden Scharnierstiftes aufweist, und mit einer an der der Scharnierseite gegenüberliegenden Verriegelungsseite des Schrankes angeordneten, über eine Betätigungseinrichtung betätigbaren Stangenverriegelung zum Verriegeln der Tür mit dem Schrankkorpus, wobei die wenigstens eine Verriegelungsstange mit wenigstens einem an ihr angeordneten Verriegelungsteil mit einem an dem Schrankkorpus befestigten Verschlußhalter in Eingriff bringbar ist.

Ein Schrank mit den vorgenannten Merkmalen ist in der EP 0 261 268 A1 offenbart; bei dem dort beschriebenen Schaltschrank ist eine an ihren Längsseiten mit jeweils einer zum Schrankkorpus gerichteten Abkantung versehene Tür an ihrer einen Seite über eine in Abhängigkeit von der Schrankhöhe zu bestimmende Mehrzahl von Scharnieren an dem Schrankkorpus zwischen einer Öffnungs- und einer Schließstellung schwenkbar gehaltert, während auf der der Scharnierseite des Schrankes gegenüberliegenden Seite, der Verriegelungsseite, eine über eine drehbare Betätigungseinrichtung längsverschiebbare und als Flachbandstange ausgebildete Verriegelungsstange angeordnet ist. Die Verriegelungsstange trägt mehrere bei dem bekannten Schrank als Zapfen ausgebildete Verriegelungsteile, die in der verriegelten Position der Tür in am Schrankkorpus befestigte Verschlußhalter eingreifen.

Die dabei verwendeten Scharniere bestehen ihrerseits aus einem am Schrankkorpus befestigten ersten Scharnierbock und einem an der Tür mittels einer Klemmstifteinrichtung im Bereich der Abkantung festgelegten zweiten Scharnierbock, wobei die beiden Scharnierböcke jeweils eine entsprechende Lagerbohrung zur Aufnahme eines die Drehachse bildenden Scharnierstiftes aufweisen.

Mit dem bekannten Schrank ist der Nachteil verbunden, daß mehrere unterschiedliche Beschlagteile für die Scharnierfunktion und die Verschlußhalterfunktion vorrätig gehalten und montiert werden müssen, wie erster und zweiter Lagerbock des Scharniers und entsprechende Verschlußhalter. Ein weiterer Nachteil besteht darin, daß aufgrund der notwendigen Montage des zweiten Lagerbockes des Scharniers an der Tür in Entsprechung zu den am Schrankkorpus befestigten ersten Lagerböcken die entsprechende Tür immer nur in einer festgelegten Ausrichtung zum Schrankkorpus montierbar ist. Aufgrund der einseitigen Anordnung des jeweils für die Scharnierfunktion notwendigen zweiten Lagerbockes auf einer Längsseite der Tür kommt es zu einer optisch asymmetrischen Vorderansicht auf die Tür.

Der Erfindung liegt die Aufgabe zugrunde, die vorgenannten Nachteile zu beseitigen und einen Schrank mit den eingangs genannten Merkmalen zur Verfügung zu stellen, der bezüglich der Montage der Tür sowie der notwendigen Beschlagteile variabel eingerichtet ist.

Die Lösung dieser Aufgabe ergibt sich einschließlich vorteilhafter Ausgestaltungen und Weiterbildungen der Erfindung aus dem Inhalt der Schutzansprüche, welche dieser Beschreibung nachgestellt sind.

Die Erfindung sieht in ihrem Grundgedanken vor, daß erster Scharnierbock und Verschlußhalter als ein eine einheitliche Gestaltung aufweisendes Kombiteil mit der Lagerbohrung für die Scharnierfunktion und mit der den Verriegelungsteil der Verriegelungsstange aufnehmenden Verriegelungsgestaltung ausgebildet sind und das Kombiteil auf der Scharnierseite des Schrankes in einer Scharnierfunktion als erster Lagerbock und auf der Verriegelungsseite des Schrankes in einer Verschlußhalterfunktion als Verschlußhalter einsetzbar ist und daß an den beiden durch die Abkantung gebildeten Längskanten der Tür jeweils jedem am Schrankkorpus befestigten Kombiteil ein einheitlich ausgebildeter zweiter Lagerbock zugeordnet ist, der bei der Scharnierfunktion des Kombiteils einen dessen Lagerbohrung durchgreifenden Scharnierstift als Klemmstifteinrichtung aufweist und der bei Verschlußhalterfunktion des Kombiteils mittels einer die Lagerbohrung des Kombiteils freilassenden Klemmstifteinrichtung an der Tür festgelegt ist und als Abdeckung für das zugeordnete Kombiteil dient.

Mit der Erfindung ist der Vorteil verbunden, daß die Zahl der erforderlichen unterschiedlichen Beschlagteile reduziert ist, da der am Schrankkorpus zu befestigende erste Lagerbock des Scharniers und der ebenfalls am Schrankkorpus zu befestigende Verschlußhalter für die Verriegelung in einem einzigen, für beide Funktionen gleichermaßen einsetzbaren einheitlichen Bauteil zusammengeführt sind. Damit braucht am Schrankkorpus zunächst unabhängig von der späteren Montage der Tür und der Zuordnung des Türanschlages bzw. unabhängig von der Montage der notwendigen Verschlußhalter für die Stangenverriegelung nur noch eine Anzahl von einheitlichen Kombiteilen an dem Schrankkorpus montiert zu werden; in gleicher Weise wird an der Tür in Entsprechung zur Lage der Kombiteile am Schrankkorpus eine gleiche Anzahl von zweiten Lagerböcken montiert, wobei erst bei der Montage dieser zweiten Lagerböcke an der Tür auf die Zuordnung des Türanschlages zu achten ist. Bei den an der die Scharnierfunktion aufweisenden Seite der Tür zu montierenden zweiten Lagerböcken erfolgt eine Verbindung mit den zugeordneten Kombiteilen durch Einstecken eines Scharnierstiftes in die zugeordneten Lagerbohrungen von Kombiteil und zweitem Lagerbock, wobei dieser Scharnierstift gleichzeitig als Klemmstift zum Festlegen des zweiten Lagerbockes dient. Auf der Verriegelungsseite werden ebenfalls zweite Lagerböcke an der Tür festgelegt, wobei hier keine Verbindung mit dem zugeordneten Kombiteil erfolgt, vielmehr die zweiten Lagerböcke nur über Kurzstifte unter Freilassen der Lagerbohrung des Kombiteils festgelegt werden. Da insoweit jedoch die miteinander zusammenwirkenden Beschlagteile jeweils identisch aufgebaut sind, ist ein Umbau der Tür lediglich durch Auswechseln der Scharnierstifte bzw. der Kurzstifte möglich.

Soweit der Scharnierstift gleichzeitig als Klemmstift für die Befestigung des zweiten Lagerbockes an dem Türblatt dient, ist der Aufbau eines entsprechenden Scharniers aus der EP 0 223 871 B1 bekannt.

Nach einem Ausführungsbeispiel der Erfindung ist vorgesehen, daß an dem Schrankkorpus sowohl an dessen Scharnierseite als auch an dessen Verriegelungsseite symmetrisch zur Hochachse mehrere Kombiteile für die Scharnierfunktion und die Verschlußhalterfunktion angebracht sind und jedem am Schrankkorpus befestigten Kombiteil an der Tür ein zugehöriger zweiter Lagerbock zugeordnet ist. Bei einer solchen Ausgestaltung ergibt sich eine symmetrische Vorderansicht des Schrankes, wobei durch die Symmetrie jedem Scharnier auf der Scharnierseite auch eine entsprechende Verriegelung der Tür mit dem Schrankkorpus auf der Verriegelungsseite zugeordnet ist.

Nach einem Ausführungsbeispiel der Erfindung ist vorgesehen, daß der zweite Lagerbock U-förmig mit den die Lagerbohrung aufweisenden Arm des Kombiteils umgreifenden und jeweils eine Lagerbohrung aufweisenden U-Schenkeln ausgebildet ist, wie diese Ausbildung in der bereits genannten EP 0 223 871 B1 für ein derartiges Scharnier beschrieben ist. Soweit jedoch das Kombiteil in seiner Verschlußhalterfunktion eingesetzt wird, ergibt sich daraus der besondere Vorteil, daß aufgrund des formschlüssigen Ineinandergreifens des am Kombiteil sitzenden Armes und der beiden U-Schenkel des an der Tür sitzenden zweiten Lagerbockes sich zusätzlich zur Scharnierseite auf der Verriegelungsseite eine höhenmäßige Ausrichtung und Festlegung der Tür gegenüber dem Schrankkorpus ergibt, so daß auf der Verriegelungsseite ein Durchhängen der Tür vermieden und somit die Funktion der Verschlußeinrichtung verbessert ist.

Soweit nach einem Ausführungsbeispiel der Erfindung vorgesehen ist, daß der zweite Lagerbock in eine im Bereich der Abkantungen der Tür vorgesehene Ausklinkung einschiebbar ist, ist eine derartige Ausbildung ebenfalls aus der EP 0 223 871 B1 bekannt.

Hinsichtlich der Stangenverriegelung ist nach einem Ausführungsbeispiel der Erfindung vorgesehen, daß die als Flachbandstange ausgebildete Verriegelungsstange zur Ausbildung des Verriegelungsteils wenigstens einen zu ihrer Längsachse in einen Winkel zur senkrecht zum Schrankkorpus festgelegten Ausrichtung der Flachbandstange gedrehten Abschnitt als Verriegelungsteil aufweist, der von einem im gleichen Winkel zur Flachbandstange angeordneten, von dem abragenden Arm des Kombiteils abstehenden Haken übergriffen ist. Eine derartige Stangenverriegelung ist in der WO 93/20315 beschrieben, so daß hinsichtlich der Funktion dieser Stangenverriegelung im einzelnen auf die Offenbarung der vorgenannten Druckschrift Bezug genommen wird.

Soweit nach Ausführungsbeispielen der Erfindung vorgesehen sein kann, daß das Kombiteil an der dem Arm gegenüberliegenden Seite einen parallel zum Arm abragenden Führungsanschlag für die zugeordnete Schmalseite des gedrehten Abschnitts der Flachbandstange aufweist, bzw. daß der innere Eckbereich zwischen Arm und am Schrankkorpus zu befestigenden Steg des Kombiteils mit einer den Eckbereich überbrückenden Schrägfläche versehen ist, sind die vorgenannten Merkmale ebenfalls in der genannten WO 93/20315 beschrieben.

In der Zeichnung ist ein Ausführungsbeispiel der Erfindung beschrieben, welches nachstehend wiedergegeben wird.

Es zeigen:

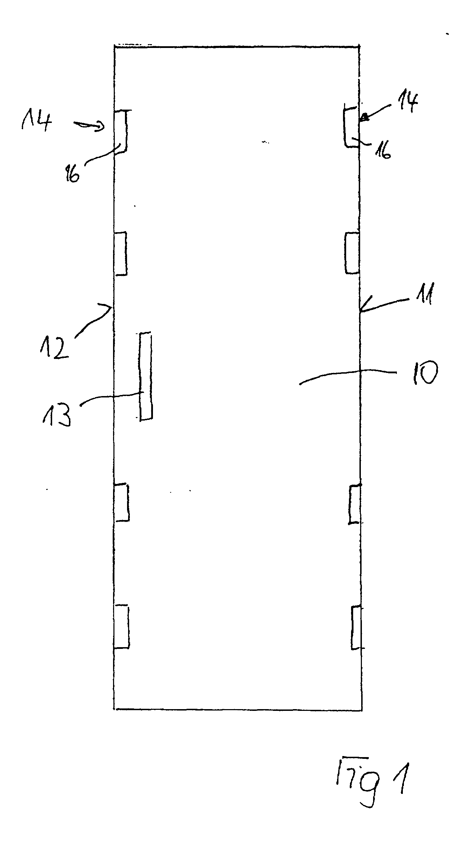

- Fig. 1: einen Schaltschrank mit einer Vorderansicht der zugehörigen Tür,
- Fig. 2: in einer Einzeldarstellung ein am Schrankkorpus zu befestigendes Kombiteil mit zugeordnetem, an der Tür zu befestigendem zweiten Lagerbock in Scharnierfunktion,
- Fig. 3: den Gegenstand der Figur 2 in Verschlußhalterfunktion.

Wie sich der Vorderansicht eines Schaltschrankes entnehmen läßt, hat das Türblatt 10 eine Scharnierseite 11 und eine Verriegelungsseite 12. Bei dem dargestellten Ausführungsbeispiel weist die Tür an jeder Längsseite vier zweite Lagerböcke 14 auf, denen in einer noch zu beschreibenden Weise unterschiedliche Funktionen zugeordnet sind. Der Verriegelungsseite 12 ist eine Betätigungseinrichtung 13 für die an der Innenseite der Tür angeordneten Verriegelungsstangen zugeordnet.

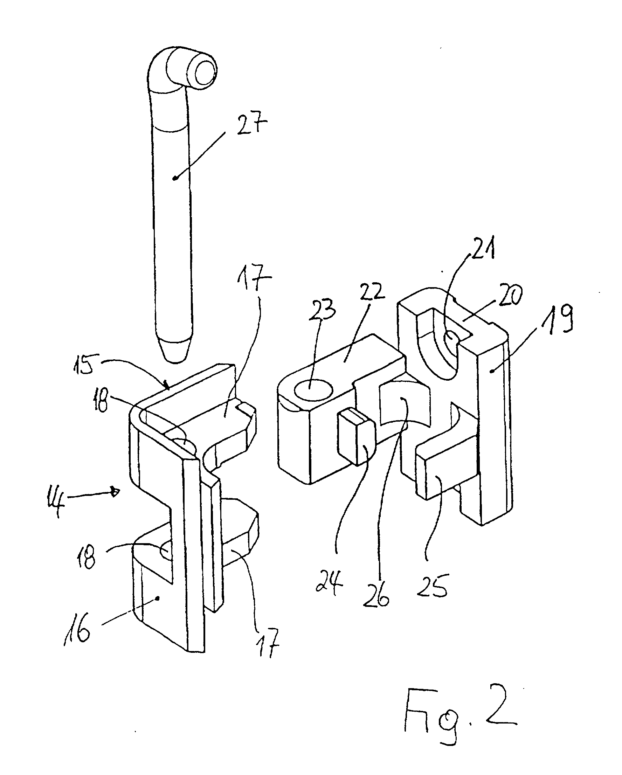

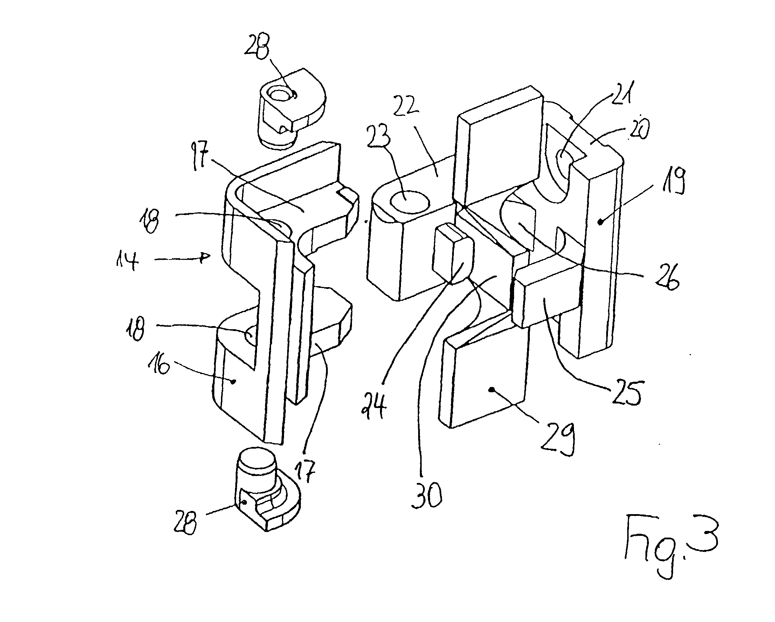

Wie sich - insoweit übereinstimmend - aus den Figuren 2 und 3 ergibt, ist der zweite Lagerbock 14 im wesentlichen L-förmig ausgebildet und dafür vorgesehen, in eine im Bereich der Abkantungen der Tür 10 vorgesehene Ausklinkung eingeschoben zu werden, wie dies im Grundsatz in der dazu genannten EP 0 223 871 B1 beschrieben ist, so daß hinsichtlich dieser Ausgestaltung des zweiten Lagerbockes auf die vorstehende Druckschrift Bezug genommen wird. Insoweit weist der zweite Lagerbock 14 einen seitlich der Abkantung verlaufenden L-Schenkel 15 auf und einen auf der Vorderseite der Tür 10 in Anlage kommenden L-Schenkel 16. In der Vertikalen ist der zweite Lagerbock jeweils U-förmig mit oberem und unterem U-Schenkel 17 ausgebildet, wobei jeweils im Eckbereich zwischen den L-Schenkeln 15, 16 in den beiden U-Schenkeln 17 je eine Lagerbohrung 18 vorgesehen ist.

In den Figuren 2 und 3 ist - insoweit wiederum übereinstimmend - ein Kombiteil 19 dargestellt, dem sowohl eine Scharnierfunktion als auch eine Verschlußhalterfunktion zugewiesen werden kann. Das Kombiteil 19 ist mit seinem Steg 20 am Schrankkorpus befestigbar und weist hierzu wenigstens einen Durchbruch 21 zum Einbringen einer Befestigungsschraube auf.

Von dem Steg 20 des Kombiteils 19 ragt in Richtung auf den zweiten Lagerbock 14 ein Arm 22 vor, der bei auf dem Schrankkorpus aufliegender Tür zwischen den U-Schenkeln 17 des zweiten Lagerbocks 14 derart zu liegen kommt, daß die am vorderen Ende des Armes 22 befindliche Lagerbohrung 23 mit den Lagerbohrungen 18 in den U-Schenkeln 17 des zweiten Lagerbockes 14 fluchtet.

Mit Blick auf die Verschlußhalterfunktion weist das Kombiteil 19 einen von seinem Arm 22 parallel zum Steg 20 abragenden Haken 24 auf, während von dem Steg 20 parallel zum Arm 22 und mit Abstand dazu ein Führungsanschlag 25 abragt. Der Eckbereich zwischen Arm 22 und Steg 20 ist mit einer den Eckbereich überbrückenden Schrägfläche 26 versehen, ebenso wie der Anschluß des Führungsanschlages 25 an den Steg 20 mit einer entsprechenden Rundung ausgebildet ist.

Aus Figur 2 ergibt sich die Scharnierfunktion der vorstehend beschriebenen miteinander zusammenwirkenden Teile insoweit, als bei auf dem Schrankkorpus aufliegender Tür 10 das Kombiteil 19 und der zweite Lagerbock 14 mittels eines die Lagerbohrungen 23, 18 durchgreifenden Scharnierstiftes 27 aneinander festgelegt werden, wobei der Scharnierstift 27 gleichzeitig als Klemmstifteinrichtung für die Halterung des zweiten Lagerbocks 14 an der Tür 10 dient, so daß durch die Verbindung von Kombiteil 19 und zweitem Lagerbock 14 ein Festlegen der Tür 10 an dem Schrankkorpus gegeben ist.

Aus Figur 3 ergibt sich nun das Zusammenwirken der insoweit identisch ausgebildeten Einzelteile - Kombiteil 19 und zweiter Lagerbock 14 - bei Verschlußhalterfunktion, indem nun der zweite Lagerbock 14 lediglich mittels zweier in seine Lagerbohrungen 18 eingesteckter Kurzstifte 28 als Klemmstifte an der Tür 10 befestigt wird. Da diese Kurzstifte 28 nicht in die Lagerbohrung 23 des Kombiteils 19 eingreifen, ergibt sich bei Verschlußhalterfunktion keine Verbindung der Tür 10 mit dem Schrankkorpus.

In Figur 3 ist zusätzlich eine als Flachbandstange ausgebildete Verriegelungsstange 29 dargestellt, die als Verriegelungsteil einen Abschnitt 30 aufweist, der gegenüber dem rechteckigen Flachbandprofil um 90 Grad zur Längsachse der Flachbandstange 29 verdreht ist. Die Flachbandstange 29 ist in ihrem Verlauf in einer senkrechten Lage zum Schrankkorpus ausgerichtet, so daß der den Verriegelungsteil bildende Abschnitt 30 parallel zum Steg 20 des Kombiteils 19 verläuft. In der in Figur 3 dargestellten Verriegelungsposition wird daher der gedrehte Abschnitt 30 von dem am Kombiteil 19 befindlichen Haken 24 übergriffen und in dieser Stellung durch den gegenüberliegenden Führungsanschlag 25 gehalten, so daß die Tür 10 nicht aufgeschwenkt werden kann. Wird durch Verschieben der Verriegelungsstange 29 der gedrehte Abschnitt 30 nach oben oder unten außer Eingriff mit dem Haken 24 gebracht, so kann die senkrecht zum Steg 20 des Kombiteils 19 verlaufende Verriegelungsstange 29 zwischen dem Haken 24 und dem Führungsanschlag 25 aus dem Kombiteil 19 heraustreten, so daß die Tür 10 mit der an ihr geführten Verriegelungsstange 29 aufschwenkbar ist.

Wie sich aus einem Vergleich der Figuren 2 und 3 ohne weiteres ergibt, ist aufgrund der jeweils einheitlich ausgebildeten Einzelteile - Kombiteil 19 und zweiter Lagerbock 14 - ein Umbau der Tür mit einer Änderung der Funktionen der vorgenannten Teile nur dadurch zu bewerkstelligen, daß der Scharnierstift 27 durch entsprechende Kurzstifte 28 ersetzt wird bzw. umgekehrt.

## Patentansprüche

1. Schrank, insbesondere aus dünnwandigem Material bestehender Schaltschrank, mit einer an einer Scharnierseite (11) mittels Scharnieren an dem Schrankkorpus festgelegten, jeweils eine zum Schrankkorpus gerichtete Abkantung aufweisenden Tür (10), wobei das Scharnier aus einem am Schrankkorpus befestigten ersten Lagerbock (19) und einem an der Tür (10) mittels einer Klemmstifteinrichtung im Bereich von deren Abkantung festgelegten zweiten Lagerbock (14) besteht und der erste Lagerbock (19) einen von ihm zur Tür abragenden Arm (22) mit einer Lagerbohrung (23) zur Aufnahme eines durch die zugeordnete Lagerbohrung (18) des zweiten Scharnierbockes (14) greifenden Scharnierstiftes (27) aufweist, und mit einer an der der Scharnierseite (11) gegenüberliegenden Verriegelungsseite (12) des Schrankes angeordneten, über eine Betätigungseinrichtung betätigbaren Stangenverriegelung zum Verriegeln der Tür mit dem Schrankkorpus, wobei die wenigstens eine Verriegelungsstange (29) mit wenigstens einem an ihr angeordneten Verriegelungsteil (30) mit einem an dem Schrankkorpus befestigten Verschlußhalter (19) in Eingriff bringbar ist, **dadurch gekennzeichnet, daß** erster Scharnierbock und Verschlußhalter als ein eine einheitliche Gestaltung aufweisendes Kombiteil (19) mit der Lagerbohrung (23) für die Scharnierfunktion und mit der den Verriegelungsteil (30) der Verriegelungsstange (29) aufnehmenden Verriegelungsgestaltung (24, 25) ausgebildet sind und das Kombiteil (19) auf der Scharnierseite (11) des Schrankes in einer Scharnierfunktion als erster Lagerbock und auf der Verriegelungsseite (12) des Schrankes in einer Verschlußhalterfunktion als Verschlußhalter einsetzbar ist und daß an den beiden durch die Abkantung gebildeten Längskanten der Tür (10) jeweils jedem am Schrankkorpus befestigten Kombiteil (19) ein einheitlich ausgebildeter zweiter Lagerbock (14) zugeordnet ist, der bei der Scharnierfunktion des Kombiteils (19) einen dessen Lagerbohrung (23) durchgreifenden Scharnierstift (27) als Klemmstifteinrichtung aufweist und der bei Verschlußhalterfunktion des Kombiteils (19) mittels einer die Lagerbohrung (23) des Kombiteils (19) freilassenden Klemmstifteinrichtung (28), insbesondere aus Kurzstiften bestehend, an der Tür (10) festgelegt ist und als Abdeckung für das zugeordnete Kombiteil (19) dient.

2. Schrank nach Anspruch 1, **dadurch gekennzeichnet, daß** an dem Schrankkorpus sowohl an dessen Scharnierseite (11) als auch an dessen Verriegelungsseite (12) symmetrisch zur Hochachse mehrere Kombiteile (19) für die Scharnierfunktion und die Verschlußhalterfunktion angebracht sind und jedem am Schrankkorpus befestigten Kombiteil (19) an der Tür(10) ein zugehöriger zweiter Lagerbock (14) zugeordnet ist.

3. Schrank nach Anspruch 1 oder 2, **dadurch gekennzeichnet, daß** der zweite Lagerbock (14) U-förmig mit den die Lagerbohrung (23) aufweisenden Arm (22) des Kombiteils (19) umgreifenden und jeweils eine Lagerbohrung (18) aufweisenden U-Schenkeln (17) ausgebildet ist.

4. Schrank nach einem der Ansprüche 1 bis 3, **dadurch gekennzeichnet, daß** jeder zweite Lagerbock (14) in eine zugeordnete im Bereich der Abkantungen der Tür (10) vorgesehene Ausklinkung einschiebbar ist.

5. Schrank nach einem der Ansprüche 1 bis 4, **dadurch gekennzeichnet, daß** die als Flachbandstange ausgebildete Verriegelungsstange (29) zur Ausbildung des Verriegelungsteils wenigstens einen zu ihrer Längsachse in einen Winkel zur senkrecht zum Schrankkorpus festgelegten Ausrichtung der Flachbandstange (29) gedrehten Abschnitt (30) als Verriegelungsteil aufweist, der von einem im gleichen Winkel zur Flachbandstange (29) angeordneten, von dem abragenden Arm (22) des Kombiteils (19) abstehenden Haken (24) übergriffen ist.

6. Schrank nach Anspruch 5, **dadurch gekennzeichnet, daß** das Kombiteil (19) an der dem Arm (22) gegenüberliegenden Seite einen parallel zum Arm (22) abragenden Führungsanschlag (25) für die zugeordnete Schmalseite des gedrehten Abschnitts (30) der Flachbandstange (29) aufweist.

7. Schrank nach Anspruch 5 oder 6, **dadurch gekennzeichnet, daß** der innere Eckbereich zwischen Arm (22) und am Schrankkorpus zu befestigenden Steg (20) des Kombiteils (19) mit einer den Eckbereich überbrückenden Schrägfläche (26) versehen ist.

## Claims

1. A cabinet, in particular a switch cabinet made from a thin-wall material, having a door (10) which is fixed to the cabinet carcass at a hinge side (11) by means of hinges and has in each case a folded-edge directed towards the cabinet carcass, the hinge comprising a first bearing block (19), which is secured to the cabinet carcass, and a second bearing block (14), which is fixed to the door (10) in the region of its folded edge by means of a clamping-pin device, and the first bearing block (19) having an arm (22), which projects therefrom towards the door and has a bearing bore (23) for receiving a hinge-pin (27) reaching through the associated bearing bore (18) in the second hinge block (14), and having a bar-type lock for locking the door to the cabinet carcass, said bar-type lock being arranged at the locking side (12), opposite the hinge side (11), of the cabinet, and being actuable by way of an actuating device, it being possible for the at least one locking bar (29) to be brought into engagement with a fastening holder (19) by means of at least one locking part (30) arranged on said locking bar, said fastening holder being secured to the cabinet carcass, **characterised in that** a first hinge block and fastening holder are formed as a uniformly constructed combined part (19) having the bearing bore (23) for the hinge function and having the locking construction (24, 25) receiving the locking part (30) of the locking bar (29), and the combined part (19) may be used on the hinge side (11) of the cabinet as a first bearing block for a hinge function, and on the locking side (12) of the cabinet as a fastening holder for a fastening-holder function, and **in that**, on the two longitudinal edges of the door (10) which are formed by the folded edge, a uniformly constructed second bearing block (14) is associated in each case with each combined part (19) secured to the cabinet carcass, which second bearing block, for the hinge function of the combined part (19), has a hinge pin (27) acting as a clamping-pin device and reaching through the bearing bore (23) in said combined part, and, for the fastening-holder function of the combined part (19), is fixed to the door (10) by means of a clamping-pin device (28), in particular comprising short pins, freeing the bearing bore (23) in the combined part, and serves as a cover for the associated combined part (19).

2. A cabinet according to Claim 1, **characterised in that** a plurality of combined parts (19) for the hinge function and the fastening-holder function are mounted on the cabinet carcass both at its hinge side (11) and at its locking side (12) such that they are symmetrical with the vertical axis, and an associated second bearing block (14) is associated with each combined part (19) secured to the cabinet carcass on the door (10).

3. A cabinet according to Claim 1 or 2, **characterised in that** the second bearing block (14) is formed in a U shape having limbs (17) of the U which reach around the arm (22), having the bore (23), of the combined part (19), and which each have a bearing bore (18).

4. A cabinet according to one of Claims 1 to 3, **characterised in that** each second bearing block (14) may be inserted into an associated notch provided in the region of the folded edges of the door (10).

5. A cabinet according to one of Claims 1 to 4, **characterised in that**, for the purpose of forming the locking part, the locking bar (29) formed as a flat-strip bar has at least one portion (30) which acts as a locking part and is rotated with respect to its longitudinal axis at an angle relative to the alignment of the flat-strip bar (29), said alignment being perpendicular to the cabinet carcass, a hook (24), which is arranged at the same angle relative to the flat-strip bar (29) and projects from the protruding arm (22) of the combined part (19), reaching over said portion (30).

6. A cabinet according to Claim 5, **characterised in that**, at the side opposite the arm (22), the combined part (19) has a guide stop (25) for the associated narrow side of the rotated portion (30) of the flat-strip bar (29), said guide stop protruding parallel to the arm (22).

7. A cabinet according to Claim 5 or 6, **characterised in that** the inner corner region between the arm (22) and a web (20), which is to be secured to the cabinet carcass, of the combined part (19) is provided with an oblique face (26) bridging the corner region.

## Revendications

1. Armoire, en particulier armoire de commande en matériau mince, avec une porte (10) fixée au corps de l'armoire d'un côté à charnières (11) par des charnières, et présentant une bordure côté corps d'armoire, la charnière consistant en un premier support de palier (19) fixé au corps de l'armoire et un deuxième support de palier (14) fixé à la porte (10) au voisinage de la bordure au moyen d'un dispositif à goupille de serrage, et le premier support de palier (19) présentant un bras (22) en saillie vers la porte, comprenant un trou de palier (23) pour la réception d'une cheville de charnière (27) passant dans le trou de palier correspondant (18) du deuxième support de palier (14), et avec un verrouillage à tringle manoeuvrable par un dispositif d'actionnement disposé du côté verrouillage (12) de l'armoire opposé au côté charnière (11), pour verrouiller la porte avec le corps de l'armoire, la (une au moins) tringle de verrouillage (29) pouvant être, par au moins une partie de verrouillage (30) pratiquée dessus, amenée en prise avec un porte-verrou (19) fixé au corps de l'armoire, **caractérisé en ce que** le premier support de charnière et support de verrou est conçu comme une pièce combinée unitaire (19) avec le trou de palier (23) pour la fonction de charnière, et avec la conformation de verrouillage (24, 25) pour la réception de la partie verrouillage (30) de la tringle de verrouillage (29), la pièce combinée (19) étant utilisable côté charnière (11) de l'armoire dans une fonction de charnière comme premier support de palier et côté verrouillage (12) de l'armoire dans une fonction de support de verrou comme support de verrou, et **en ce qu'**un deuxième support de palier (14) de conception unitaire est disposé sur les deux arêtes longitudinales de la porte (10) formées par les bordures, associé à chaque pièce combinée (19) fixée au corps d'armoire, et présentant pour la fonction de charnière de la pièce combinée (19) une cheville de charnière (27) formant goupille de serrage traversant son trou de palier (23), et pour la fonction de verrouillage de la pièce combinée (19) un dispositif à goupilles de serrage (28), consistant en particulier en goupilles courtes le fixant à la porte (10), servant de recouvrement pour la pièce combinée associée (19) et laissant libre le trou de palier (23) de la pièce combinée (19).

2. Armoire selon la revendication 1, **caractérisée en ce que** sur le corps de l'armoire, aussi bien côté charnière (11) que côté verrouillage (12), symétriquement par rapport à l'axe vertical, plusieurs pièces combinées (19) sont montées pour la fonction charnière et la fonction support de verrou et qu'à chaque pièce combinée (19) fixée au corps d'armoire est associée sur la porte (10) un deuxième support de palier (14) correspondant.

3. Armoire selon les revendications 1 ou 2, **caractérisée en ce que** le deuxième support de palier (14) est conçu en forme de U, les bras du U (17) présentant chacun un trou de palier (18) et enserrant le bras (22) présentant le trou de palier (23) de la pièce combinée (19).

4. Armoire selon l'une des revendications 1 à 3, **caractérisée en ce que** chaque deuxième support de palier (14) peut être glissé dans un évidement correspondant prévu dans la porte (10) au niveau des rebords.

5. Armoire selon l'une des revendications 1 à 4, **caractérisée en ce que** la tringle de verrouillage (29) conçue comme tringle plate, présente pour réaliser la partie verrouillage au moins un tronçon (30) pivoté d'un angle autour de son axe longitudinal par rapport à la direction de la tringle plate (29) fixée perpendiculairement au corps de l'armoire, comme partie de verrouillage, qui est saisie par un crochet (24) saillant du bras (22) de la pièce combinée (19) et disposé selon le même angle par rapport à la tringle plate (29).

6. Armoire selon la revendication 5, **caractérisée en ce que** la pièce combinée (19) présente, sur le côté opposé au bras (22), une butée de guidage (25) saillant parallèlement au bras (22) pour la face étroite correspondante du tronçon pivoté (30) de la tringle plate (29).

7. Armoire selon les revendications 5 ou 6, **caractérisée en ce que** la zone du coin intérieur de la pièce combinée (19) entre le bras (22) et le plat (20) à fixer au corps de l'armoire est dotée d'une surface oblique (26) enjambant la zone du coin.
